Europäisches Patentamt

(19) European Patent Office

Office européen des brevets

(11) Publication number: **0 205 206**
**B1**

(12) **EUROPEAN PATENT SPECIFICATION**

(45) Date of publication of patent specification: **05.04.89**

(21) Application number: **86200934.7**

(22) Date of filing: **29.05.86**

(51) Int. Cl.⁴: **A 01 D 82/00**

(54) Apparatus for processing fodder-plants.

(30) Priority: **04.06.85 NL 8501602**

(43) Date of publication of application:
**17.12.86 Bulletin 86/51**

(45) Publication of the grant of the patent:
**05.04.89 Bulletin 89/14**

(84) Designated Contracting States:
**AT BE CH DE FR GB IT LI LU NL SE**

(56) References cited:
**DE-A-1 947 206**
**GB-A- 478 505**
**NL-A-6 906 464**
**NL-A-7 703 304**
**US-A-2 909 988**
**US-A-4 446 678**

(73) Proprietor: **Multinorm B.V.**
**Hoofdweg 1278 P.O. Box 1**
**NL-2150 AA Nieuw-Vennep (NL)**

(72) Inventor: **Vissers, Hermanus Hendrik**
**Venneperweg 711**
**NL-2152 MA Nieuw-Vennep (NL)**

(74) Representative: **de Vries, Johannes Hendrik**
**Fokke et al**
**Octrooibureau Los en Stigter B.V. P.O. Box**
**20052**
**NL-1000 HB Amsterdam (NL)**

Courier Press, Leamington Spa, England.

# Description

The invention relates to an apparatus for processing a fodder crop, according to the preamble of claim 1.

GB-A-478 505 discloses an apparatus of this type wherein moisture is extracted from the grass by the pressure of the belts exerted on the grass when it travels with the belts.

Further, a mower for fodder crop is known, which is provided with rollers rotating in an opposite direction for crushing the crop, thereby the wax layer of the crop is damaged so that the crop dies quicker.

It is of importance to shorten the drying time required for the crop as much as possible in order to become less dependent on the weather conditions and to obtain a fodder crop with good quality.

The invention aims to provide an apparatus of the above-mentioned type wherein the fodder crop is processed such that the drying time required for the crop is further decreased.

To this end the apparatus according to the invention is distinguished by the features of the characterizing part of claim 1.

In this manner it is obtained that the crop is processed between both belts by the belts rubbing on the crop between the belts whereby the wax layer and the cells of the crop are damaged so that the moisture can evaporate even more quickly.

According to an embodiment of the invention one of said belts is made as a sieve belt. Any adhering fluid and moisture from the cells can easily leave through the sieve belt. The drying time on the field may thereby be shortened to some hours.

Preferably, in the belt part between the inlet and outlet openings, at least one roller around which one of the belts extends is lying between two rollers around which the other belt extends, whereby it is obtained in a constructively very simple manner that the belts in the respective belt part have different angular velocities with respect to the three rollers and thereby move along each other and the crop enclosed between the belts.

According to a favourable embodiment at each roller of one belt lying between two rollers of the other belt a pressure device is provided for exerting a pressure force on the belts extending over this roller, wherein preferably the pressure force exerted by each pressure device is adjustable.

According to a very favourable embodiment both said belts pass through a pressing section preceding the outlet opening. In this manner it is possible to remove the moisture directly from the cells of the crop so that a drying period is completely superfluous. The crop can be directly stored after processing, for example in a silage stock.

In this case in an embodiment of the invention the belts are led over at least one roller with a relatively great diameter in the pressing section wherein at least one pressure device is provided for exerting a pressure force on the belts extending over this roller. In view of the belts being led over a roller with a relatively great diameter, the crop is compressed between the belts during a relatively long period so that the removal of the moisture from the cells in a sufficient amount is guaranteed.

In order to obtain a good discharge of the moisture, according to the invention the rollers lying within the sieve belt may be provided with a grooved surface.

According to the invention the processing of the crop may be improved in that the surface of at least one of the belts directed towards the other belt is made rough.

In order to allow the discharge of great amounts of moisture along a short section an underpressure or vacuum can be generated over a part of the periphery of the roller with relatively great diameter lying within the sieve belt.

According to the invention a cutting unit may be provided for supplying the crop directly to the inlet opening.

According to the invention it is preferred to provide a bale press unit for directly pressing into bales the crop discharged by the outlet opening. In this manner it is avoided that the crop after processing will be lying on the field whereby contamination of the crop by bacteria is prevented. This shows the advantage that it is not required to add decontamination agents so that the dairy-produce from life stock feeded with the crop meet very high standards.

The invention will hereinafter be further explained by reference to the drawings in which some embodiments are shown.

Fig. 1 is a schematically shown side view of a first embodiment of the apparatus according to the invention.

Fig. 2 is a schematically shown side view of a second embodiment of the apparatus according to the invention.

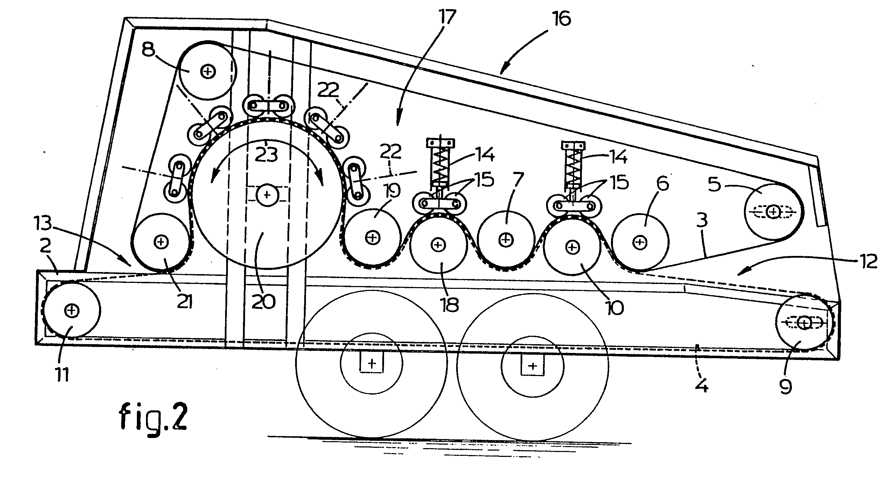

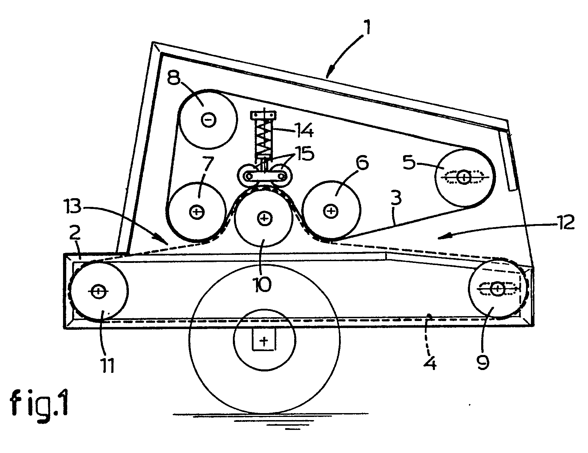

Referring to fig. 1 there is shown an apparatus 1 for processing fodder crop, said apparatus comprising a schematically indicated frame 2. The apparatus 1 comprises two endless belts 3 and 4 lying above each other. The belt 3 is provided with a closed surface whereas the belt 4 is made as a sieve belt which is shown in the drawings by a dashed line. The belt 3 is led along rollers 5, 6, 7 and 8 while the belt 4 is led along rollers 9, 10 and 11. The rollers 5-11 are born in the frame 2, wherein the rollers 5 and 9 are slidable for tensioning the belts 3 and 4. The belts 3, 4 determine an inlet opening 12 and an outlet opening 13. For the belt part between the inlet opening 12 and the outlet opening 13 the belts extend along the same path while a layer of crop is clamped between the belts. Here the roller 10 of the belt 4 lies between the rollers 6 and 7 of the belt 3. The belts 3, 4 thereby have mutual local different velocities in the section between the inlet opening 12 and the outlet opening 13, so that the crop between the belts 3, 4 is processed in an effective way along a relatively long section, wherein the wax layer and the cells are damaged so that after processing the crop the crop will quickly dry. The drying time on the field can thereby be restricted to some hours. Any liquid being expressed can easily be discharged through the sieve belt 4.

The roller 10 can be provided with a grooved surface for an improved discharge of the expressed liquid. In order to obtain a good spreading of the crop along the width of the belts, which width can be 1,6 m for example, it is possible to mount a distribution device (not shown) before the inlet opening 12.

At the embodiment shown in fig. 1 a pressure device 14 is mounted at the roller 10, which pressure device presses the belts 3 and 4 on the roller 10 with an adjustable pressure force. The pressure device 14 comprises two pressure rollers 15 contacting the belt 3. The pressure force exerted by the pressure device 14 is adjustable so that the pressure force can be chosen in accordance with the crop to be processed.

Further the velocity by which the belts 3 and 4 are driven is adjustable so that the time for the crop to remain between the belts 3 and 4 in the section between the inlet opening 12 and the outlet opening 13 can be chosen in such a manner that an optimum processing and layer thickness are obtained.

In order to further damage the wax layer and the cells of the crop the surface of one of both belts 3, 4 directed to the other belt can be made rough. Thereby the drying time of the crop is still further reduced.

Fig. 2 shows an apparatus 16 for processing fodder crop partly corresponding with the described apparatus 1 of fig. 1. Corresponding parts are indicated with the same reference numbers.

In the apparatus 16 both belts 3 and 4 after the rollers 6, 10 and 7 pass through a pressing section 17 in which the fluid is expressed out of the damaged cells of the crop. Thereby the crop discharged from the outlet opening 13 can be stored directly, for example in a silage stock. The pressing section 17 comprises rollers 18 and 19 corresponding with the rollers 10 and 7, wherein the roller 18 can also be provided with a grooved surface. At the roller 18 a pressure device 14 with pressure rollers 15 is provided, the pressure force exerted on the belts 3 and 4 being adjustable. At the rollers 18 and 19 the cells are still further damaged and a first expressing of cells moisture takes place.

The roller 19 is followed by a roller 20 with relatively great diameter lying within the sieve belt 4, so that the crop is compressed between the belts 3 and 4 along a great section during a longer period whereby a sufficient removal of cell moisture is guaranteed. Along a roller 21 the belt 3 passes to the roller 8 and the sieve belt 4 to the roller 11. The roller 20 is made with a grooved surface to promote the discharge of the fluid expressed. In order to stimulate the fluid discharge an underpressure or vacuum can be generated on the inner side of the roller 20 along the area 23 whereby an air transport and thus a fluid transport will occur through the crop and the belts to a fluid separator not shown in a vacuum conduit also not shown.

Five pressure devices are distributed along the circumference of the roller 20 on which the belts 3 and 4 are supported, said pressure devices 22 exerting an adjustable pressure force on the belts 3 and 4. The pressure devices 22 are made in the same manner as the pressure devices 14.

As in the device 1 the surface of the belts 3 and 4 can be made rough. The velocity of the belts 3 and 4 is adjustable. Further a distribution device for the crop can be mounted before the inlet opening 12, if required.

The apparatus 16 shows the important advantage that a drying period of the crop on the field is not required anymore at all so that the user may mow process and directly store the crop at the most convenient time fully independent on the weather conditions whereby a fodder of optimum quality is obtained. Because the crop needs not to stay lying on the field, a further grow of the crop can take place directly after mowing.

Preferably the outlet opening 13 is followed by a bale press not shown for directly baling the crop discharged by the outlet opening 13. Thereby it is avoided that the crop will lie on the field after processing so that the crop can not be contaminated. Adding decontamination agents is thus not required anymore so that the milk from the cattle feeded with the crop thus processed meets high quality standards.

Further it is possible to mount a cutting unit at the inlet opening 12 in a manner not further shown, which cutting unit supplies the crop directly to the inlet opening 12.

It is possible to omit the rollers 18 and 19 of the apparatus 16. Further a smaller number of pressure devices could be mounted at the roller 20. It is also possible to use the waste heat generated by the driving means for further drying the crop.

**Claims**

1. Apparatus (1, 16) for processing fodder crop, comprising two endless belts (3, 4), one lying above the other and each being led along a plurality of rollers (5, 6, 7, 8, 19, 10, 11, 18, 20), said belts (3, 4) determining an inlet and an outlet opening (12, 13) for the crop, wherein said belts for the belt part between the inlet and outlet openings (12, 13) extend along the same path and wherein, in the belt part between the inlet and outlet openings, at least one roller (10; 18; 20) which is contacted by one (4) of the belts is lying between two rollers (6, 7; 7, 19; 19, 21) which are each contacted by the other belt (3), characterized in that the spacing distance between the circumference of said at least one roller (10; 18; 20) of said one belt (4) and the circumference of each of said two rollers (6, 7; 7, 19; 19, 21) of said other belt (3) is less than the diameter of said at least one roller (10; 18; 20).

2. Apparatus according to claim 1, characterized in that at each roller (10; 18; 20) of the one belt (4) lying between two rollers (6, 7; 7, 19; 19, 21) of the other belt (3) a pressure device (14, 22) is provided for exerting a pressure force on the belts (3, 4) extending over this roller.

3. Apparatus according to claim 2, characterized in that the pressure force exerted by each pressure device (14, 22) is adjustable.

4. Apparatus according to any one of the preceding claims, characterized in that both said belts (3, 4) pass through a pressing section (17) preceding the outlet opening (13).

5. Apparatus according to claim 4, characterized in that the belts (3, 4) are led over at least one roller (20) with a relatively great diameter in the pressing section (17) wherein at least one pressure device (22) is provided for exerting a pressure force on the belts (3, 4) extending over the roller (20).

6. Apparatus according to claim 5, characterized in that the pressure force exerted by each pressure device (22) is adjustable.

7. Apparatus according to claim 5 or 6, characterized in that one (4) of said belts is made as a sieve belt, and in that an underpressure or vacuum can be generated over a part of the periphery of the roller (20) with relatively great diameter lying within the sieve belt (4).

8. Apparatus according to claim 7, characterized in that the rollers (9, 10, 18, 20, 11) lying within the sieve belt (4) are provided with a grooved surface.

9. Apparatus according to any one of the preceding claims, characterized in that the surface of at least one of the belts directed towards the other belt is made rough.

10. Apparatus according to any one of the preceding claims, characterized by a cutting unit for supplying the crop directly to the inlet opening.

11. Apparatus according to any one of the preceding claims, characterized by a bale press unit for directly pressing into bales the crop discharged by the outlet opening.

**Patentansprüche**

1. Vorrichtung zur Bearbeitung von Halmgut, bestehend aus zwei übereinander liegenden und jeweils längs einer Vielzahl von Rollen geführten endlosen Bändern, wobei diese Bänder einen Einlauf und einen Auslauf für das Gut bestimmen, wobei diese Bänder sich in dem Bereich zwischen dem Einlauf und dem Auslauf längs der gleichen Bahn erstrecken und wobei in dem Bereich zwischen dem Einlauf und dem Auslauf wenigstens eine Rolle, welche von einem der Bänder berührt wird, zwischen zwei Rollen liegt, welche beide von dem anderen Band berührt werden, dadurch gekennzeichnet, daß der Abstand zwischen dem Umfang dieser wenigstens einen Rolle (10; 18; 20) des einen Bandes (4) und dem Umfang einer jeden der zwei Rollen (6, 7; 7, 19; 19, 21) des anderen Bandes (3) kleiner ist als der Durchmesser der wenigstens einen Rolle (10; 18; 20).

2. Vorrichtung nach Anspruch 1, dadurch gekennzeichnet, daß an jeder zwischen zwei Rollen (6, 7; 7, 19; 19, 20) des anderen Bandes (3) liegenden Rolle (10; 18; 20) des einen Bandes (4) eine Preßvorrichtung (14, 22) vorgesehen ist, um eine Druckkraft auf die über diese Rolle laufenden Bänder (3; 4) auszuüben.

3. Vorrichtung nach Anspruch 2, dadurch gekennzeichnet, daß die durch jede Preßvorrichtung (14, 22) ausgeübte Druckkraft einstellbar ist.

4. Vorrichtung nach irgendeinem der vorangehenden Ansprüche, dadurch gekennzeichnet, daß beide Bänder (3; 4) einen vor dem Auslauf (13) liegenden Preßabschnitt (17) durchlaufen.

5. Vorrichtung nach Anspruch 4, dadurch gekennzeichnet, daß die Bänder (3; 4) über wenigstens eine Rolle (20) mit relativ großem Durchmesser im Preßabschnitt (17) geführt werden, wobei wenigstens eine Preßvorrichtung (22) vorgesehen ist, um eine Druckkraft auf die über die Rolle (20) hinweglaufenden Bänder (3; 4) auszuüben.

6. Vorrichtung nach Anspruch 5, dadurch gekennzeichnet, daß die durch jede Preßvorrichtung (22) ausgeübte Druckkraft einstellbar ist.

7. Vorrichtung nach Anspruch 5 oder 6, dadurch gekennzeichnet, daß das eine (4) der beiden Bänder als Siebband ausgebildet ist und daß über einen innerhalb des Siebbandes liegenden Teil des Umfanges der Rolle (22) mit relativ großem Durchmesser ein Unterdruck und ein Saugdruck herstellbar ist.

8. Vorrichtung nach Anspruch 7, dadurch gekennzeichnet, daß die innerhalb des Siebbandes (4) liegenden Rollen (9, 10, 18, 20, 11) mit einer gerillten Oberfläche versehen sind.

9. Vorrichtung nach irgendeinem der vorangehenden Ansprüche, dadurch gekennzeichnet, daß die Oberfläche wenigstens eines Bandes, welche dem anderen Band zugewandt ist, aufgerauht ist.

10. Vorrichtung nach irgendeinem der vorangehenden Ansprüche, gekennzeichnet durch eine Schneideinrichtung, um das Halmgut direkt dem Einlauf zuzuführen.

11. Vorrichtung nach irgendeinem der vorangehenden Ansprüche, gekennzeichnet durch eine Ballenpresse, durch welche das den Auslauf verlassende Halmgut direkt zu Ballen verpreßbar ist.

**Revendications**

1. Appareil (1, 16) pour le traitement de fourrage, comprenant deux courroies sans fin (3, 4), une première s'étendant au-dessus de l'autre et chacune étant menée le long de plusieurs rouleaux (5, 6, 7, 8, 19, 10, 11, 18, 20), lesdites courroies (3, 4) déterminant une ouverture d'entrée et une ouverture de sortie (12, 13) pour la récolte, lesdites courroies, sur la partie de courroie comprise entre les ouvertures d'entrée et de sortie (12, 13), s'étendant le long du même trajet, et, dans la partie des courroies comprise entre les ouvertures d'entrée et de sortie, au moins un premier rouleau (10, 18; 20), avec lequel une première (4) des courroies est en contact, s'étendant entre deux rouleaux (6, 7; 7, 19; 19, 21) avec lesquels l'autre courroie (3) est en contact, caractérisé en ce que la distance d'écartement entre la circonférence dudit, au moins, un premier rouleau (10; 18; 20) de ladite première courroie (4) et la circonférence de chacun desdits deux rouleaux (6, 7; 7, 19; 19, 21) de ladite autre courroie (3) est inférieure au diamètre dudit, au moins un, premier rouleau (10; 18; 20).

2. Appareil selon la revendication 1, caractérisé en ce qu'à chaque rouleau (10; 18; 20) de la première courroie (4), s'étendant entre deux rouleaux (6, 7; 7, 19; 19, 21) de l'autre courroie (3), il est prévu un dispositif presseur (14, 22) destiné à exercer une force de pression sur les courroies (3, 4) passant sur ce rouleau.

3. Appareil selon la revendication 2, caractérisé en ce que la force de pression exercée par chaque dispositif presseur (14, 22) est réglable.

4. Appareil selon l'une quelconque des revendications précédentes, caractérisé en ce que lesdites courroies (3, 4) passent toutes deux dans une section (17) de compression précédant l'ouverture de sortie (13).

5. Appareil selon la revendication 4, caractérisé en ce que les courroies (3, 4) sont menées sur au moins un rouleau (20) de diamètre relativement grand dans le tronçon (17) de compression, où au moins un dispositif presseur (22) est prévu pour exercer une force de pression sur les courroies (3, 4) passant sur le rouleau (20).

6. Appareil selon la revendication 5, caractérisé en ce que la force de pression exercée par chaque dispositif presseur (22) est réglable.

7. Appareil selon la revendication 5 ou 6, caractérisé en ce qu'une première (4) desdites courroies est réalisée sous la forme d'une courroie-tamis, et en ce qu'une dépression ou un vide peut être généré sur une partie de la périphérie du rouleau (20) de diamètre relativement grand s'étendant dans la courroie-tamis (4).

8. Appareil selon la revendication 7, caractérisé en ce que les rouleaux (9, 10, 18, 20, 11) s'étendant dans la courroie-tamis (4) présentent une surface rainurée.

9. Appareil selon l'une quelconque des revendications précédentes, caractérisé en ce que la surface d'au moins l'une des courroies tournée vers l'autre courroie est rendue rugueuse.

10. Appareil selon l'une quelconque des revendications précédentes, caractérisé par un dispositif de coupe destiné à amener la récolte directement à l'ouverture d'entrée.

11. Appareil selon l'une quelconque des revendications précédentes, caractérisé par une presse à balles destinée à comprimer directement en balles la récolte déchargée par l'ouverture de sortie.

fig.2

EP 0 205 206 B1

fig.1